# EUROPEAN PATENT SPECIFICATION

(11) **EP 1 806 387 B1**
(45) Date of publication and mention of the grant of the patent: **04.07.2012**
(21) Application number: 06025123.8
(22) Date of filing: 05.12.2006
(51) Int. Cl.: C09D 11/10, C09D 11/00, C09D 11/02

(54) **Photocurable ink composition and photocurable ink set**
Lichthärtbare Tintenzusammensetzung und lichthärtbarer Tintensatz
Composition d'encre photodurcissable et jeu d'encre photodurcissable

(30) Priority: 07.12.2005 JP 2005353700; 07.12.2005 JP 2005353701; 24.07.2006 JP 2006201363; 24.07.2006 JP 2006201365
(43) Date of publication of application: 11.07.2007
(73) Proprietor: Seiko Epson Corporation, Shinjuku-ku Tokyo (JP)
(72) Inventor: Nakano, Keitaro, Suwa-shi Nagano-ken 392-8502 (JP); Oyanagi, Takashi, Suwa-shi Nagano-ken 392-8502 (JP)
(74) Representative: Grünecker, Kinkeldey, Stockmair & Schwanhäusser

(56) References cited:
- EP-A- 1 616 921
- EP-A- 1 674 499
- EP-A1- 0 997 507
- WO-A-2005/047405
- DATABASE WPI Week 200439 Derwent Publications Ltd., London, GB; AN 2004-414073 XP002435581 & JP 2004 099796 A (KONICA CORP) 2 April 2004 (2004-04-02)

## Description

### FIELD OF THE INVENTION

The present invention relates to an ink composition and an ink set that are curable by light such as ultraviolet light, and particularly to a one-component photocurable ink composition and a two-component photocurable ink set, each having high curability and excellent storage stability.

### BACKGROUND OF THE INVENTION

An ink jet recording method is a printing method in which droplets of an ink composition are allowed to fly and deposited on a recording medium such as paper to perform printing. This ink jet recording method is characterized by that images having high resolution and high quality can be printed at high speed. The ink composition used in the ink jet recording method is generally one mainly comprising an aqueous solvent and containing a coloring component and a wetting agent such as glycerin for the purpose of preventing clogging.
On the other hand, when printing is performed on a recording medium such as paper or cloth into which an aqueous ink composition is hard to penetrate, or a plate or a film made of a material such as metal or plastics into which the aqueous ink composition does not penetrate, for example, a resin such as a phenol, melamine, vinyl chloride, acrylic or polycarbonate resin, the ink composition is required to contain a component which can allow the coloring material to be stably fixed to the recording medium.

For such a requirement, there is disclosed a photocurable ink jet ink comprising a coloring material, a photocuring agent, and a photoradical polymerization initiator (for example, see patent document 1). It is disclosed that according to this ink, ink bleeding to a recording medium can be prevented, thereby being able to improve image quality.
Further, such a photocurable ink jet ink is required to be good in storage stability and safety, small in energy for curing and fixing, and excellent in chemical resistance, mechanical strength and adhesion of a cured image which can be formed on the recording medium. In patent document 2, a technique using a dendrimer has been disclosed. The dendrimer has a molecular structure in which functional groups are concentrated on a surface thereof at high density, compared to a general linear polymer, so that it is expected as a functional polymer nanomaterial. Further, the dendrimer is low in viscosity, compared to the linear polymeric compound.

Patent Document 1: US Patent 5,623,001
Patent Document 2: JP-A-2004-99796

However, the dendrimer itself is high in viscosity, compared to a usual monomer component, and can be used in an ink composition only in an amount of about 5% by weight or less. For example, in examples of patent document 1, all have been used only in an amount of less than 3% by weight. When the dendrimer is added in such an amount, such an effect as to remarkably improve curability has not been obtained. Further, in examples of patent document 2, the initial viscosity of ink at 25°C has exceeded 30 mPa·s, although the dendrimer is added in an amount of less than 3% by weight. WO 2005/047405 and JP 2004 99796 A disclose ink compositions.

### SUMMARY OF THE INVENTION

The invention intends to overcome the disadvantages in the above-mentioned background art, and to provide a photocurable ink composition and a photocurable ink set, each of which is excellent in image curability and more excellent in storage stability and curability than the technique disclosed in patent document 2.

Other objects and effects of the invention will become apparent from the following description.

The present inventors have made extensive investigations. As a result, the above-mentioned objects have been achieved by employing the following constitutions, thus leading to the accomplishment of the invention.

That is, the photocurable ink composition according to the invention is as follows:
(1) A photocurable ink composition containing at least a dendritic polymer as a photoradical polymerizable compound as defined in claim 1;
(2) The photocurable ink composition according to (1) above, wherein the dendritic polymer comprises a dendrimer and/or a hyperbranch polymer.
(3) The photocurable ink composition according to (1) above, wherein the dendritic polymer comprises a dendrigraft polymer and/or a hypergraft polymer.
   The dendritic polymer is present in the ink composition in an amount of 3 to 30% by weight.
(5) The photocurable ink composition according to any one of (1) to (3) above, further containing allyl glycol and/or N-vinylformamide as another photoradical polymerizable compound.
(6) The photocurable ink composition according to (5) above, wherein the allyl glycol and/or N-vinylformamide are present in the ink composition in an amount of 20 to 80% by weight.

The photocurable ink composition according to the present invention is excellent in image curability owing to the incorporation of the dendritic polymer. Furthermore, the dendritic polymer is incorporated in an amount of 3 to 30% by weight, by which the storage stability is further improved. More preferably, allyl glycol and/or N-vinylformamide are incorporated, which allows an increase of the incorporation amount of the dendritic polymer while maintaining the viscosity of the ink composition at a low value. In addition the present invention provides the following ink composition.

(1) A photocurable ink set comprising ink composition A containing at least a photoradical polymerization initiator and ink composition B containing at least a dendritic polymer as a photoradical polymerizable compound, as defined in claim 6;
(2) The photocurable ink set according to (1) above, wherein the dendritic polymer comprises a dendrimer and/or a hyperbranch polymer.
(3) The photocurable ink set according to (1) above, wherein the dendritic polymer comprises a dendrigraft polymer and/or a hypergraft polymer.
   The dendritic polymer is present in ink composition B in an amount of 3 to 30% by weight based on the weight of ink composition B.
(5) The photocurable ink set according to any one of 3 (1) to (3) above, further containing allyl glycol and/or N-vinylformamide as another photoradical polymerizable compound in ink composition A and/or ink composition B.
(6) The photocurable ink set according to (5) above, wherein the allyl glycol and/or N-vinylformamide are present in ink composition B in an amount of 20 to 80% by weight based on the weight of ink composition B.

According to the invention, the photocurable ink set is made to have high curability and also excellent storage stability by incorporating a photoradical polymerization initiator to ink composition A and incorporating a dendritic polymer to ink composition B.

### DETAILED DESCRIPTION OF THE INVENTION

### Photocurable Ink Composition

The photocurable ink composition of the invention will be described in detail below.

The photocurable ink composition of the invention contains the dendritic polymer as a photoradical polymerizable compound. The dendritic polymers are roughly classified into six structures as shown below (see Dendritic Polymers -World of High Fictionalization Broadened by Multidendritic Structure-, supervised by Keigo Aoki/Masaaki Kakimoto, NTS).
I. Dendrimer
II. Linear dendritic polymer
III. Dendrigraft polymer
IV. Hyperbranch polymer
V. Star hyperbranch polymer
VI. Hypergraft polymer

Of these, I to III have a degree of branching (DB) of 1, and have a structure with no defect. On the contrary, IV to VI have a random branch structure which may contain a defect. In particular, the dendrimer is possible to arrange reactive functional groups on an outermost surface thereof at high density and in a concentrated manner, compared to a linear polymer generally used, and highly expected as a functional polymer material. Further, the hyperbranch polymer, dendrigraft polymer and hypergraft polymer are also possible to introduce a number of reactive functional groups into an outermost surface thereof, although not so many as the dendrimer, and excellent in curability.

These dendritic polymers repeat three-dimensionally branched structures, and are highly branched, different from the conventional linear polymer or branched polymer. Accordingly, it is possible to keep viscosity low, compared to the linear polymer having the same molecular weight.

Synthesis methods of the dendrimer used in the invention include a divergent method in which synthesis is performed from the center to the outside and a convergent method in which synthesis is performed from the outside to the center.

The dendrimer, hyperbranch polymer, dendrigraft polymer and hypergraft polymer used in the invention are desirably ones which are solid at room temperature and have a number average molecular weight ranging from 1000 to 100000, and particularly, ones having a number average molecular weight ranging from 2000 to 50000 are preferably used. When they are not solid at room temperature, the retention properties of an image formed deteriorate. Further, when the molecular weight is lower than the above-mentioned range, a fixed image becomes brittle. Furthermore, when the molecular weight is higher than the above-mentioned range, the viscosity of ink excessively increases even when the amount added is decreased, resulting in impracticality in terms of flying characteristics.

Further, the dendrimer, hyperbranch polymer, dendrigraft polymer and hypergraft polymer used in the invention are preferably a dendrimer, hyperbranch polymer, dendrigraft polymer and hypergraft polymer having radical polymerizable functional groups on outermost surfaces thereof. Polymerization reaction rapidly proceeds by imparting the radical polymerizable structure to the outermost surface.

Examples of the polymers with dendrimer structure include amidoamine-based dendrimers (US Patents 4,507,466, 4,558,120, 4,568,737, 4,587,329, 4,631,337 and 4,694,064), phenyl ether-based dendrimers (US patent 5,041,516 and Journal of American Chemistry, 112, 7638-7647 (1990*))*. As for the amidoamine-based dendrimer, a dendrimer having terminal amino groups and carboxylic acid methyl ester groups is commercially available from Aldrich as "Starburst TM (PAMAM)". Further, it is also possible to allow the terminal amino groups of the amidoamine-based dendrimer to react with various acrylic acid derivatives and methacrylic acid derivatives to synthesize amidoamine-based dendrimers having corresponding terminal, and to use them.

The acrylic acid derivatives and methacrylic acid derivatives which can be utilized include but are not limited to acrylic or methacrylic acid alkyl esters of methyl, ethyl, n-butyl, t-butyl, cyclohexyl, palmityl, stearyl, and acrylic or methacrylic acid alkylamides of acrylic acid amide, and isopropylamide.

Further, as for the phenyl ether-based dendrimers, various ones are described, for example, in the above-mentioned Journal of American Chemistry, 112, 7638-7647 (1990*).* For example, it is described that 3,5-dihydroxybenzyl alcohol is allowed to react with 3,5-diphenoxybenzyl bromide to synthesize second-generation benzyl alcohol, an OH group of which is converted to Br using CBr₄ and triphenylphosphine, followed by similar reaction with 3,5-dihydroxybenzyl alcohol to synthesize next-generation benzyl alcohol and hereinafter the above-mentioned reactions are repeated to synthesize a desired dendrimer. Also for the phenyl ether-based dendrimer, the terminals can be substituted by ones having various chemical structures in place of the terminal benzyl ether bonds. For example, in case of the synthesis of the dendrimer described in the above-mentioned Journal of American Chemistry, 112*,* the use of various alkyl halides in place of the above-mentioned benzyl bromide provides phenyl ether-based dendrimers having terminal structures with corresponding alkyl groups. In addition, a polyamine dendrimer (Macromol. Symp., 77, 21 (1994*))* and a derivative thereof whose terminal groups are modified can be used.

As the hyperbranch polymers, there can be used, for example, hyperbranch polyethylene glycol and the like. The hyperbranch polymer is obtained by synthesizing a target polymer in one step using a monomer having two or more reaction points of one kind corresponding to branch portions and only one reaction point of another kind corresponding to a connecting portion in one molecule (non-patent document 3 (Macromolecules, 29, 3831-3838 (1996*)).* For example, one example of a monomer for the hyperbranch polymer includes 3,5-dihydroxybenzoic acid derivative. When a production example of the hyperbranch polymer is mentioned, poly[bis(triethylene glycol) benzoate] which is the hyperbranch polymer can be synthesized by heating methyl 3,5-bis((8'-hydroxy-3',6'-dioxaoctyl)oxy)benzoate which is a hydrolyzate of methyl 3,5-bis((8'-(t-butyldiphenylsiloxy)-3',6'-dioxaoctyl)oxy)-benzoate obtained from 1-bromo-8-(t-butyldiphenylsiloxy)-3,6-dioxaoctane and methyl 3,5-dihydroxybenzoate with dibutyltin diacetate under a nitrogen atmosphere.

When 3,5-dihydroxybenzoic acid is used, the terminal groups of the hyperbranch polymer become hydroxyl groups. Accordingly, the hyperbranch polymers having various terminal groups can be synthesized by using appropriate alkyl halides to the terminal groups.

A monodisperse polymer with dendrimer structure, the hyperbranch polymer or the like is governed in its characteristics by the chemical structure of a main chain and the chemical structure of its terminal group. In particular, its characteristics become largely different by the difference in the terminal group or a substituent group in the chemical structure. In particular, one having polymerizable group at the terminal has a high gelation effect because of its reactivity, so that it is useful. The polymerizable group-containing dendrimer is obtained by chemically modifying the terminal of one having a basic atomic group such as an amino group, a substituted amino group or a hydroxyl group at its terminal, with a polymerizable group-containing compound.

For example, an isocyanate group-containing vinyl compound is added, for example, to a polyfunctional compound obtained by Michael addition of an active hydrogen-containing (Meth)acrylate-based compound to an amino-based dendrimer, thereby performing the synthesis. Further, for example, (meth)acrylic acid chloride or the like is allowed to react with the amino-based dendrimer, thereby obtaining a dendrimer having a polymerizable group at the terminal. Vinyl compounds which give such polymerizable groups include a compound having a radical polymerizable ethylenic unsaturated bond, and examples thereof include, for example, unsaturated carboxylic acids such as acrylic acid, methacrylic acid, itaconic acid, crotonic acid, isocrotonic acid and maleic acid and salts thereof, and various radical polymerizable ethylenic unsaturated bond-containing compounds described later.

In the invention, the above-mentioned dendrimer, hyperbranch polymer, dendrigraft polymer and hypergraft polymer may be used either alone or in combination with the dendrimer, hyperbranch polymer, dendrigraft polymer and hypergraft polymer of another kind.

In the photocurable ink composition of the invention, the amount of the above-mentioned dendritic polymer added is within the range of about 3 to 30% by weight, by which suitability as the photocurable ink composition can be maintained. More preferably, it is within the range of about 5 to 25% by weight.
When the amount of the dendritic polymer added is less than 3% by weight, curability as the photocurable ink composition is insufficient. When it increases exceeding 30% by weight, problems arise with respect to the viscosity, dispersion stability, storage stability and the like of the ink composition in some cases.

The photocurable ink composition of the invention comprises the above-mentioned dendritic polymer, and preferably ally glycol and/or *N*-vinylformamide as a diluent monomer and a photoradical polymerization initiator.
Allyl glycol and/or N-vinylformamide are a monofunctional radical polymerizable monomer, and there is little possibility that they react with a photoradical polymerization initiator to cause undesirable polymerization during storage. They are therefore suitable.
When the amount of allyl glycol and/or N-vinylformamide added is less than 20% by weight, problems arise with respect to the viscosity, dispersion stability, storage stability and the like of the ink composition. When it increases exceeding 80% by weight, curability as the photocurable ink composition becomes insufficient in some cases. More preferably, it is within the range of about 20 to 70% by weight.

The photocurable ink composition of the invention preferably contains the above-mentioned ally glycol and/or N-vinylformamide, and may further contain another photoradical polymerizable compound.
The other photoradical polymerizable compounds include but are not limited to, for example, monomers.
The monomer means a molecule capable of forming a structural unit in a basic structure of a polymer. The monomer used in the invention is also called a photopolymerizable monomer, and includes a monofunctional monomer, a bifunctional monomer and a polyfunctional monomer. Any of these can be used. It is preferred that any of the monomers has a PII value (Primary Irritation Index) of 2 or less.

The monofunctional monomers, bifunctional monomers and polyfunctional monomers having a PII value of 2 or less, which can be used in the invention, are exemplified in the following Table 1.

**Table 1**

| Monofunctional monomer | | | |
|---|---|---|---|
| | Material Name | Viscosity (mPa·s) | P.I.I |
| | (2-Methyl-2-ethyl-1,3-dioxolan-4 yl)methyl acrylate (MEDOL-10, Osaka Organic Chemical) | 5.1 | 1.3 |
| | (2-Methyl-2-isobutyl-1,3-dioxolan-4-yl)methyl acrylate (MIBDOL-10, Osaka Organic Chemical) | 5.3 | 1.0 |
| | Phanoxyethyl acrylate (Biscoat #192, Osaka Organic Chemical) | 3.3 | 1.7 |
| | Isobonyl acrylate (IBXA, Osaka Organic Chemical) | 2.6 | 0.6 |
| | Methoxydiethylene glycol monoacrylate (Blenmer PME-100, NOF Corporation) | 2 | 0.7 |
| | Acryloyl morpholine (ACMO, Kohjln Co.) | 12 | 0.5 |
| | | | |

| Bifunctional monomer | | | |
|---|---|---|---|
| | Material Name | Viscosity (mPa·s) | P.I.I |
| | Ethylene glycol dimethaclylate (Light-Estet EG, Kyoeisha Chemical Co.) | 3 | 0.6 |
| | Diethylene glycol dimethacylate (Light-Ester 2EG, Kyoeisha Chemical Co.) | 5 | 0.5 |
| | Tripropylene glycol diacrylate (Acronix M-220, Toagosal Co.) | 12 | 1.6 |
| | 1,9-Nonanediol diacrylate (Biscoat #260, Osaka Organic Chemical) | 21 | 2.0 |
| | Polyethylene glycol #400 diacrylate (NK ester A400, Shin-Nakamura Chemical Co.) | 58 | 0.4 |
| | Tetraethylene glycol dimethacrylate (NK ester 4G, Shin-Nakamura Chemical Co.) | 14 | 0.5 |
| | 1,6-Hexanediol dimethacrylate (NK ester HD-N, Shin-Nakamura Chemical Co.) | 6 | 0.5 |
| | Neopentyl glycol dimethacrylate (NK ester NPG, Shin-Nakamura Chemical Co.) | 7 37 | 0.0 0.6 |
| | 2-Hydroxy1,3-dimethacryloxypropane (NK ester 701, Shin-Nakamura Chemical Co.) | | |
| | | | |

| Polyfunctional monomer | | | |
|---|---|---|---|
| | Material Name | Viscosity (mPa·s) | P.I.I. |
| | Trimethylolpropane (NK ester TMPT, Shin-Nakamura Chemical Co.) | 42 | 0.8 |
| | Trimethylolpropane PO adduct triacrylate (Biscoat #360, Osaka Organic Chemical Co.) | 55 | 1.5 |
| | Trimethylolpropane PO adduct triacrylate (New Frontier TMP-3P, Dal-ichi Kogyo Seiyaku Co.) | 60 | 0.1 |
| | Glyoerin PO adduct triacrylate (Biscoat #GPT, Osaka Organic Chemical) | 75 | 0.8 |

The viscosity in the above Table is a measurement value at 25°C.

Further, in addition to the above-mentioned monomers, an oligomer may be contained as a photoradical polymerizable compound of the photocurable ink composition of the invention.

The photocurable ink composition of the invention preferably contains a photoradical polymerization initiator.
The photoradical polymerization initiators include but are not particularly limited to, for example, benzyl methyl ketal, α-hydroxyalkylphenone, α-aminoalkylphenone, acylphosphine oxide, an oxime ester, thioxanthone, α-dicarbonyl, and anthraquinone.

Further, there can be used photoradical polymerization initiators available under the trade names of Vicure 10 and 30 (manufactured by Stauffer Chemical), Irgacure 127, 184, 500, 651, 2959, 907, 369, 379, 754, 1700, 1800, 1850, 819, OXE01, Darocur 1173, TPO and ITX (manufactured by Ciba Specialty Chemicals), Quantacure CTX (manufactured by Aceto Chemical), Kayacure DETX-S (manufactured by Nippon Kayaku Co., Ltd.) and ESACURE KIP150 (manufactured by Lamberti).

A polymerization accelerator may be contained in the photocurable ink composition of the invention.
The polymerization accelerators include but are not limited to Darocur EHA and EDB (manufactured by Ciba Specialty Chemicals).

Further, the photocurable ink composition of the invention preferably contains a thermoradical polymerization inhibitor, thereby improving the storage stability of the ink composition. The thermoradical polymerization inhibitors include Irgastab UV-10 (manufactured by Ciba Specialty Chemicals).

Furthermore, a surfactant can be used in the ink composition of the invention. For example, a polyester-modified silicone or a polyether-modified silicone is preferably used as a silicone-based surfactant, and it is particularly preferred that a polyether-modified polydimethylsiloxane or a polyester-modified polydimethylsiloxane is used. Specific examples thereof include BYK-347, BYK-348, BYK-UV3500, 3510, 3530 and 3570 (manufactured by BYK-Chemie Japan K.K.).

In addition, the photocurable ink composition of the invention can also contain a coloring material.
The coloring material used in this case may be either a dye or a pigment. However, the pigment is more advantageous in terms of durability of printed matter.
As the dyes used in the invention, there can be used various dyes which are generally used for ink jet recording, such as a direct dye, an acid dye, a food dye, a basic dye, a reactive dye, a disperse dye, a vat dye, a soluble vat dye and a reactive disperse dye.

As the pigments used in the invention, inorganic pigments and organic pigments can be used without particular limitation.
As the inorganic pigments, there can be used carbon blacks produced by known processes such as a contact process, a furnace process and a thermal process, as well as titanium oxide and iron oxide. Further, as the organic pigments, there can be used azo pigments (including an azo lake, an insoluble azo pigment, a condensed azo pigment, a chelate azo pigment and the like), polycyclic pigments (for example, a phthalocyanine pigment, a perylene pigment, a perynone pigment, an anthraquinone pigment, a quinacridone pigment, a dioxazine pigment, a thioindigo pigment, an isoindolinone pigment, a quinophthalone pigment , dye chelates (for example, a basic dye type chelate, acid dye type chelate ), nitro pigments, nitroso pigments, and aniline black.

Specific examples of the pigments as carbon blacks include C.I. Pigment Black 7, No. 2300, No. 900, MCF88, No. 33, No. 40, No. 45, No. 52, MA7, MA8, MA100, No. 2200B manufactured by Mitsubishi Chemical Corporation, Raven 5750, Raven 5250, Raven 5000, Raven 3500, Raven 1255, Raven 700 manufactured by Columbia Co., Regal 400R, Regal 330R, Regal 660R, Mogul L, Mogul 700, Monarch 800, Monarch 880, Monarch 900, Monarch 1000, Monarch 1100, Monarch 1300, Monarch 1400 manufactured by Cabot Co., and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4 manufactured by Degussa Co.

The pigment to be used in a yellow ink includes C.I. Pigment Yellow 1, 2, 3, 12, 13, 14, 16, 17, 73, 74, 75, 83, 93, 95, 97, 98, 109, 110, 114, 120, 128, 129, 138, 150, 151, 154, 155, 180, 185, 213 .
Further, the pigment to be used in a magenta ink includes C.I. pigment red 5, 7, 12, 48(Ca), 48(Mn), 57(Ca), 57:1, 112, 122, 123, 168, 184, 202 and 209, C.I. Pigment Violet 19 .

Furthermore, the pigment to be used in a cyan ink includes C.I. pigment blue 1, 2, 3, 15:3, 15:4, 60, 16 and 22.
According to a preferred embodiment of the invention, the average particle size of the pigment ranges preferably from 10 to 200 nm, and more preferably from about 50 to 150 nm. The amount of the coloring material added in the ink composition preferably ranges from about 0.1 to 25% by weight, and more preferably from about 0.5 to 15% by weight.

According to a preferred embodiment of the invention, these pigments can be used in the ink composition in the form of a pigment dispersion obtained by dispersing them in an aqueous medium with a dispersing agent or a surfactant. As preferred dispersing agents, there can be used dispersing agents which are conventionally used for preparing pigment dispersions, for example, polymeric dispersing agents.

Further, when the ink composition contains the coloring material, the ink composition containing the coloring agent may comprise a plurality thereof for each color. For example, when a dark color or light color of the same series is added for each color in addition to the basic four colors of yellow, magenta, cyan and black, there are mentioned light magenta (light color) and red (dark color) in addition to magenta, light cyan (light color) and blue (dark color) in addition to cyan, and gray and light black (light color) and mat black (dark color) in addition to black.

Further, a wetting agent, a penetrating solvent, a pH adjuster, a preservative, a mildewproofing agent may be added to the photocurable ink composition of the invention as other additives known as being usable in a photocurable ink.
In addition, a leveling additive, a matte agent, or a polyester-based resin, polyurethane-based resin, vinyl-based resin, acrylic resin, rubber-based resin or wax for adjusting film characteristics may be added as needed.
Further, when the photocurable ink composition of the invention are used in an ink jet recording method, it is preferred for use that each composition has a viscosity of 10 mPa·s or less at 25°C.

An ink jet recording method using the photocurable ink composition of the invention comprises ejecting the ink composition on a recording medium and thereafter irradiating it with ultraviolet light.
A irradiation light source is preferably a light having a wavelength of 350 nm to 450 nm, although not particularly limited.
The ultraviolet dose is from 10 mJ/cm² to 20,000 mJ/cm², and preferably ranges from 50 mJ/cm² to 15,000 mJ/cm². When the ultraviolet dose is within such a range, the curing reaction can be sufficiently performed.

Ultraviolet irradiation means include lamps such as a metal halide lamp, a xenon lamp, a carbon arc lamp, a chemical lamp, a low-pressure mercury lamp and a highpressure mercury lamp. For example, it can be performed by using commercially available lamps such as H Lamp, D Lamp and V Lamp manufactured by Fusion System can also be used.
Further, the ultraviolet irradiation can be performed with an ultraviolet light-emitting semiconductor elements such as an ultraviolet light-emitting diode (ultraviolet LED) and an ultraviolet light-emitting semiconductor laser.

### Photocurable Ink Set

Then, the photocurable ink set of the invention will be described in detail below.

The photocurable ink set comprises ink composition A containing at least a photoradical polymerization initiator and ink composition B containing at least a dendritic polymer as a photoradical polymerizable compound.

Ink composition A used in the photocurable ink set of the invention will be described.
The photoradical polymerization initiators used in ink composition A of the invention include those described as the photocurable polymerization initiator for use in the photocurable ink composition of the present invention.

Next, Ink composition B used in the photocurable ink set of the invention will be described.
The photocurable ink set of the invention contains a dendritic polymer as the photoradical polymerizable compound. The dendritic polymer include those described above as the dendritic polymer for used in the photocurable ink composition of the present invention.

In ink composition B of the photocurable ink set of the invention, the amount of the above-mentioned dendritic polymer added is within the range of 3 to 30% by weight based on the weight of ink composition B, by which suitability as the photocurable ink set can be maintained. More preferably, it is within the range of about 5 to 25% by weight.
When the amount of the dendritic polymer added is less than 3% by weight, curability as the photocurable ink set is insufficient. When it increases exceeding 30% by weight, problems arise with respect to the viscosity, dispersion stability, storage stability and the like of the ink composition in some cases.

It is preferred that ink compositions A and/or B of the photocurable ink set of the invention contain allyl glycol and/or N-vinylformamide. In particular, it is preferred that ink composition B contains allyl glycol and/or N-vinylformamide.
Allyl glycol and/or N-vinylformamide are a monofunctional radical polymerizable monomer, and there is little possibility that they react with a photoradical polymerization initiator to cause undesirable polymerization during storage. They are therefore suitable.
When the amount of allyl glycol and/or N-vinylformamide added is less than 20% by weight based on the weight of the ink composition, problems arise with respect to the viscosity, dispersion stability, storage stability and the like of the ink composition. When it increases exceeding 80% by weight, curability as the photocurable ink composition becomes insufficient in some cases. More preferably, it is within the range of about 20 to 70% by weight.

Ink compositions A and B of the photocurable ink set of the invention may contain other photoradical polymerizable compounds.
The other photoradical polymerizable compounds include but are not limited to, for example, monomers described above as the other photoradical polymerizable compounds for use in the photocurable ink composition of the present invention.

Further, in addition to the above-mentioned monomers, an oligomer may be contained as the photoradical polymerizable compound of the photocurable ink set of the invention.

When the photoradical polymerizable compound is contained in ink composition A containing the photoradical polymerization initiator, there is little possibility that it reacts with the photoradical polymerization initiator to cause undesirable polymerization during storage, as long as it is a monofunctional radical polymerizable monomer. As the monofunctional monomer used herein, N-vinylformamide, and allyl glycol are suitable.

A polymerization accelerator may be contained in ink composition A or B of the photocurable ink set of the invention.
The polymerization accelerators include but are not limited to Darocur EHA and EDB (manufactured by Ciba Specialty Chemicals).

Further, ink composition A or B of the photocurable ink set of the invention preferably contains a thermoradical polymerization inhibitor, thereby improving the storage stability of the ink composition. The thermoradical polymerization inhibitors include Irgastab UV-10 (manufactured by Ciba Specialty Chemicals).

Furthermore, a surfactant can be used in ink composition A or B of the invention. For example, a polyester-modified silicone or a polyether-modified silicone is preferably used as a silicone-based surfactant, and it is particularly preferred that a polyether-modified polydimethylsiloxane or a polyester-modified polydimethylsiloxane is used. Specific examples thereof include BYK-347, BYK-348, BYK-UV3500, 3510, 3530 and 3570 (manufactured by BYK-Chemie Japan K.K.).

In addition, the photocurable ink set of the invention can also contain a coloring material in ink composition A or ink composition B.
The coloring material used in this case may be either a dye or a pigment. However, the pigment is more advantageous in terms of durability of printed matter.
As the dyes used in the invention, there can be used various dyes which are generally used for ink jet recording, such as a direct dye, an acid dye, a food dye, a basic dye, a reactive dye, a disperse dye, a vat dye, a soluble vat dye and a reactive disperse dye.

As the pigments used in the invention, inorganic pigments and organic pigments can be used without particular limitation, examples thereof include those described above as the pigment for use in the photocurable ink composition of the invention.

According to a preferred embodiment of the invention, the average particle size of the pigment ranges preferably from 10 to 200 nm, and more preferably from about 50 to 150 nm. The amount of the coloring material added in the ink composition preferably ranges from about 0.1 to 25% by weight, and more preferably from about 0.5 to 15% by weight.

According to a preferred embodiment of the invention, these pigments can be used in ink composition A or B in the form of a pigment dispersion obtained by dispersing them in an aqueous medium with a dispersing agent or a surfactant. As preferred dispersing agents, there can be used dispersing agents which are conventionally used for preparing pigment dispersions, for example, polymeric dispersing agents.

Further, when the ink composition contains the coloring material, the ink composition containing the coloring agent may comprise a plurality thereof for each color. For example, when a dark color or light color of the same series is added for each color in addition to the basic four colors of yellow, magenta, cyan and black, there are mentioned light magenta (light color) and red (dark color) in addition to magenta, light cyan (light color) and blur (dark color) in addition to cyan, and gray and light black (light color) and mat black (dark color) in addition to black.

Further, a wetting agent, a penetrating solvent, a pH adjuster, a preservative, a mildewproofing agent may be added to ink composition A or B of the invention as other additives known as being usable in a photocurable ink..
In addition, a leveling additive, a matte agent, or a polyester-based resin, polyurethane-based resin, vinyl-based resin, acrylic resin, rubber-based resin or wax for adjusting film characteristics may be added as needed.
Further, when ink compositions A and B of the invention are used in an ink jet recording method, it is preferred for use that each composition has a viscosity of 10 mPa·s or less at 25°C.

The photocurable ink set of the invention undergoes curing reaction by mixing ink compositions A and B and then performing light irradiation. The mixing may be performed either before printing or after printing, as long as it is performed before the curing reaction. That is, the mixing and printing may be performed either in a form that ink composition A and ink composition B are deposited on the same position on a recording medium or in a form that ink composition A and ink composition B are mixed and then deposited on a recording medium.

A irradiation light source and irradiation conditions are the same as those described above for the irradiation of the photocurable ink composition of the invention.

### EXAMPLES

The present invention will be illustrated in greater detail with reference to the following Examples.

### Examples 1A to 24A & Comparative Examples 1A to 4A

### (Preparation of Photocurable Ink Compositions)

"STAR-501" manufactured by Osaka Organic Chemical Industry was used as a hyperbranch polymer. This "STAR-501" is a hyperbranch polymer obtained by branching functional groups, taking dipentaerythritol as a core, contains dipentaerythritol hexaacrylate as a diluent monomer, and has a viscosity of 210 Pa·s and a functional group number of 20 to 99 (acryl groups).

Dendrimer 7 was synthesized in the following manner.
In a reaction vessel having a volume of 1 liter, 31 g of ethylenediamine, 256 g of dimethyl acrylate and 300 g of methanol were put, and reaction was conducted at 40°C for 6 hours with stirring under a stream of nitrogen. After termination of the reaction, methanol was distilled away from the resulting mixture using a rotary evaporator. Then, the resulting product was added to a large excess of diethyl ether, and purified by a reprecipitation operation. To the resulting reaction product 1, 500 g of methanol was added to dissolve it, and the following reaction was conducted.
A methanol solution containing reaction product 1 was put in a reaction vessel having a volume of 2 liters, and 240 g of ethylenediamine was added to conduct reaction at 27°C for 6 hours with stirring under a stream of nitrogen. After the reaction, purification was similarly performed by removal of methanol by distillation and a reprecipitation operation. Then, 1000 g of methanol was added to the resulting reaction product 2 to dissolve it, and the following reaction was conducted.

A methanol solution containing reaction product 2 was put in a reaction vessel having a volume of 5 liters, and 667 g of dimethyl acrylate was put therein to conduct reaction at 40°C for 6 hours with stirring under a stream of nitrogen. After the reaction, purification was similarly performed by removal of methanol by distillation and a reprecipitation operation. Then, 2000 g of methanol was added to the resulting reaction product 3 to dissolve it, and the following reaction was conducted.
A methanol solution containing reaction product 3 was put in a reaction vessel, and 361 g of ethylenediamine was added to conduct reaction at 27°C for 6 hours with stirring under a stream of nitrogen. After the reaction, purification was similarly performed by removal of methanol by distillation and a reprecipitation operation. Then, 2000 g of acetone dehydrated with a molecular sieve was added to the resulting reaction product 4 to dissolve it, and the following reaction was conducted.

Into a reaction vessel, 1000 g of an acetone solution containing reaction product 4 was dispensed, and 2153 g of Karenz BEI (1-bis(acryloyloxymethyl)ethyl isocyanate, manufactured by Showa Denko K.K.) was added, followed by mixing by stirring under a stream of nitrogen. Then, 1 g of DABCO (1,4-diazabicyclo[2,2,2]octane, manufactured by Tokyo Chemical Industry Co., Ltd.) was further added, followed by mixing by stirring. After the reaction temperature was elevated to 50°C, reaction was conducted for 6 hours. After termination of the reaction, acetone was distilled away using a rotary evaporator, and then, 6838 g of allyl glycol was added to prepare allyl glycol solution 8 of dendrimer 7 having a concentration of 30% by massweight.
In this case, the number of acryloyl groups arranged on an outermost face per molecule of dendrimer 7 becomes 72.

Hypergraft polymer A was prepared in the following manner.
In a reaction vessel, 20 g of methyl ethyl ketone was put, and the atmosphere in the vessel was replaced with nitrogen. Then, the temperature was elevated to 65°C, and a mixed solution of 85 g of styrene, 15 g of n-butyl methacrylate and 6 g of n-dodecyl mercaptan was slowly added dropwise. After termination of the dropping, stirring was performed as such for 1 hour. Thereafter, a mixed solution of 40 g of styrene, 10 g of methacrylic acid and 3 g of n-dodecyl mercaptan was slowly added dropwise, and reaction was further conducted at 70°C for 2 hours to obtain a polymerized product. This solution was concentrated, and then, methanol was added to perform reprecipitation, thereby achieving purification to prepare hypergraft polymer A with a weight average molecular weight of 14000 in which a main chain portion is a copolymer of styrene/n-butyl methacrylate (monomer mol% ratio = 85/15) and a side chain portion is a copolymer of styrene/methacrylic acid (monomer mol% ratio = 80/20).

Pigment dispersion were prepared by methods shown below.
Allyl glycol (manufactured by Nippon Nyukazai Co., Ltd., hereinafter referred to as "AG") as a monomer was added to 15 parts of C.I. Pigment Black 7 (carbon black) as a coloring agent and 3.5 parts of Discoall N-509 (manufactured by Dainichiseika Color & Chemicals Mfg. Co., Ltd.) as a dispersing agent to make 100 parts, followed by mixing by stirring to obtain a mixture. This mixture was subjected to dispersing treatment for 6 hours together with zirconia beads (diameter: 1.5 mm) using a sand mill (manufactured by Yasukawa Seisakusho K.K.)

Then, the zirconia beads were separated with a separator to obtain a black pigment dispersion.

Pigment dispersions corresponding to respective colors, that is, a cyan pigment dispersion (C.I. Pigment Blue 15:3), a magenta pigment dispersion (C.I. Pigment Violet 19) and a yellow pigment dispersion (C.I. Pigment Yellow 155), were similarly prepared.

Any one of the above-described hyperbranch polymer, dendrimer 7 and hypergraft polymer A, the pigment dispersion, a diluent monomer, a photoradical polymerization initiator, a polymerization accelerator, a dispersing agent and a thermoradical polymerization inhibitor were added so as to give a composition (% by weight) shown in the following Tables 2A to 6A to prepare photocurable color ink compositions of Examples 1A to 20A. Further, dendritic polymer-free photocurable color ink compositions were taken as Comparative Examples 1A to 4A, and compositions thereof are shown in Table 8A.

**Table 2A**

| | Example 1A | Example 2A | Example 3A | Example 4A |
|---|---|---|---|---|
| Allyl Glycol | 52 | 52 | 51.8 | 52.1 |
| N-Vinylformamide | 25 | 25 | 25 | 25 |
| Hyperbranch Polymer (STAR-501) | 12 | 12 | 12 | 12 |
| Irgacure 819 | 4 | 4 | 4 | 4 |
| Irgacure 127 | 1 | 1 | 1 | 1 |
| Darocur EDB | 1 | 1 | 1 | 1 |
| Kayacure DETX-s | 1 | 1 | 1 | 1 |
| BYK-UV3570 | 0.1 | 0.1 | 0.1 | 0.1 |
| Irgastab UV10 | 0.2 | 0.2 | 0.2 | 0.2 |
| Pigment Black-7 | 3 | | | |
| Pigment Blue-15:3 | | 3 | | |
| Pigment Violet-19 | | | 3 | |
| Pigment Yellow-155 | | | | 3 |
| Dispersing Agent (Polyoxyalkylenepolyalkylenepolyamine) | 0.7 | 0.7 | 0.9 | 0.6 |

**Table 3A**

| | Example 5A | Example 6A | Example 7A | Example 8A |
|---|---|---|---|---|
| Allyl Glycol | 52 | 52 | 51.8 | 52.1 |
| N-Vinylformamide | 25 | 25 | 25 | 25 |
| Dendrimer 7 | 12 | 12 | 12 | 12 |
| Irgacure 819 | 4 | 4 | 4 | 4 |
| Irgacure 127 | 1 | 1 | 1 | 1 |
| Darocur EDB | 1 | 1 | 1 | 1 |
| Kayacure DETX-s | 1 | 1 | 1 | 1 |
| BYK-UV3570 | 0.1 | 0.1 | 0.1 | 0.1 |
| Irgastab UV10 | 0.2 | 0.2 | 0.2 | 0.2 |
| Pigment Black-7 | 3 | | | |
| Pigment Blue-15:3 | | 3 | | |
| Pigment Violet-19 | | | 3 | |
| Pigment Yellow-155 | | | | 3 |
| Dispersing Agent (Poly- | 0.7 | 0.7 | 0.9 | 0.6 |
| oxyalkylenepolyalkylene- | | | | |
| polyamine) | | | | |

**Table 4A**

| | Example 9A | Example 10A | Example 11A | Example 12A |
|---|---|---|---|---|
| Allyl Glycol | 77 | 77 | 76.8 | 77.1 |
| Hyperbranch Polymer | 12 | 12 | 12 | 12 |
| (STAR-501) | | | | |
| Irgacure 819 | 4 | 4 | 4 | 4 |
| Irgacure 127 | 1 | 1 | 1 | 1 |
| Darocur EDB | 1 | 1 | 1 | 1 |
| Kayacure DETX-s | 1 | 1 | 1 | 1 |
| BYK-UV3570 | 0.1 | 0.1 | 0.1 | 0.1 |
| Irgastab UV10 | 0.2 | 0.2 | 0.2 | 0.2 |
| Pigment Black-7 | 3 | | | |
| Pigment Blue-15: | | 3 | | |
| Pigment Violet-19 | | | 3 | |
| Pigment Yellow-155 | | | | 3 |
| Dispersing Agent (Polyoxyalkylenepolyalkylenepolyamine) | 0.7 | 0.7 | 0.9 | 0.6 |

**Table 5A**

| | Example 13A | Example 14A | Example 15A | Example 16A |
|---|---|---|---|---|
| Ethylene Glycol Dimeth- | 83 | 83 | 82.8 | 83.1 |
| acrylate | | | | |
| Hyperbranch Polymer | 6 | 6 | 6 | 6 |
| (STAR-501) | | | | |
| Irgacure 819 | 4 | 4 | 4 | 4 |
| Irgacure 127 | 1 | 1 | 1 | 1 |
| Darocur EDB | 1 | 1 | 1 | 1 |
| Kayacure DETX-s | 1 | 1 | 1 | 1 |
| BYK-UV3570 | 0.1 | 0.1 | 0.1 | 0.1 |
| Irgastab UV10 | 0.2 | 0.2 | 0.2 | 0.2 |
| Pigment Black-7 | 3 | | | |
| Pigment Blue-15:3 | | 3 | | |
| Pigment Violet-19 | | | 3 | |
| Pigment Yellow-155 | | | | 3 |
| Dispersing Agent (Polyoxyalkylenepolyalkylenepolyamine) | 0.7 | 0.7 | 0.9 | 0.6 |

**Table 6A**

| | Example 17A | Example 18A | Example 19A | Example 20A |
|---|---|---|---|---|
| Allyl Glycol | 52 | 52 | 51.8 | 52.1 |
| N-Vinylformamide | 25 | 25 | 25 | 25 |
| Hypergraft Polymer A | 12 | 12 | 12 | 12 |
| Irgacure 819 | 4 | 4 | 4 | 4 |
| Irgacure 127 | 1 | 1 | 1 | 1 |
| Darocur EDB | 1 | 1 | 1 | 1 |
| Kayacure DETX-s | 1 | 1 | 1 | 1 |
| BYK-UV3570 | 0.1 | 0.1 | 0.1 | 0.1 |
| Irgastab UV10 | 0.2 | 0.2 | 0.2 | 0.2 |
| Pigment Black-7 | 3 | | | |
| Pigment Blue-15:3 | | 3 | | |
| Pigment Violet-19 | | | 3 | |
| Pigment Yellow-155 | | | | 3 |
| Dispersing Agent (Polyoxyalkylenepolyalkylenepolyamine) | 0.7 | 0.7 | 0.9 | 0.6 |

**Table 7A**

| | Compara. Example 1A | Compara. Example 2A | Compara. Example 3A | Compara. Example 4A |
|---|---|---|---|---|
| Allyl Glycol | 64 | 64 | 63.8 | 64.1 |
| N-Vinylformamide | 25 | 25 | 25 | 25 |
| Irgacure 819 | 4 | 4 | 4 | 4 |
| Irgacure 127 | 1 | 1 | 1 | 1 |
| Darocur EDB | 1 | 1 | 1 | 1 |
| Kayacure DETX-s | 1 | 1 | 1 | 1 |
| BYK-UV3570 | 0.1 | 0.1 | 0.1 | 0.1 |
| Irgastab UV10 | 0.2 | 0.2 | 0.2 | 0.2 |
| Pigment Black-7 | 3 | | | |
| Pigment Blue-15:3 | | 3 | | |
| Pigment Violet-19 | | | 3 | |
| Pigment Yellow-155 | | | | 3 |
| Dispersing Agent (Polyoxyalkylenepolyalkylenepolyamine) | 0.7 | 0.7 | 0.9 | 0.6 |

As the thermoradical polymerization inhibitor, Irgastab UV-10 (manufactured by Ciba Specialty Chemicals) was used.

The numerical values shown in the Tables are indicated in terms of "% by weight".

### (Storage Stability Test)

The photocurable ink composition described above was allowed to stand under environment of 60°C for 7 days, and the initial viscosity (mPa·s) and the viscosity after standing were measured with a rheometer (manufactured by Physica, MCR-300). The rate of change in viscosity was evaluated by the following criteria. The results thereof are shown in Tables 8A to 13A.

AA: The rate of change between the initial viscosity and the viscosity after standing is less than ±12.5%.
A: The rate of change between the initial viscosity and the viscosity after standing is from ±12.5% to less than ±50%.

### (Curability Test)

The photocurable ink composition described above was dropped onto a glass substrate, and irradiated with ultraviolet light having a wavelength of 365 nm under such conditions as to provide an irradiation intensity of 17 mW/cm², an irradiation time of 6 seconds and an integrated quantity of light of 102 mJ/cm² to cure the ink composition.
Separately, utilizing an ink jet printer, PM-G900, manufactured by Seiko Epson Corporation, the above described photocurable ink composition was subjected to solid pattern printing at normal temperature and normal pressure using a PC sheet (manufactured by Teijin Chemicals Ltd., Panlite Sheet). Simultaneously with the printing, curing treatment was performed by means of an irradiation equipment irradiating ultraviolet light with a wavelength of 365 nm and an irradiation intensity of 17 mW/cm², which was installed at a paper-discharge port, under such curing conditions as to provide an irradiation time of 6 seconds and an integrated light quantity of light of 102 mJ/cm².
For each of the above, visual evaluation of a surface state and the like were conducted according to the following criteria. The results thereof are shown in Tables 8A to 13A.

AAA: There is no problem in curability, and there is also no problem with respect to nail rubbing of a surface.
AA: Scratched by nail rubbing of a surface, but within a practical level.
A: A surface is scratched by rubbing with a finger, but within a practical level.
B: Only a surface is cured, and the inside is in liquid form.
C: Slightly cured, but liquid in whole.

**Table 8A**

| | Example 1A | Example 2A | Example 3A | Example 4A |
|---|---|---|---|---|
| Storage Stability Evaluation (60°C×7 days) | A | A | A | A |
| Curability Evaluation (Spot Test on Glass) | AA | AA | AA | AA |
| Curability Evaluation (Printing with Printer) | AA | AA | AA | AA |

**Table 9A**

| | Example 5A | Example 6A | Example 7A | Example 8A |
|---|---|---|---|---|
| Storage Stability Evaluation (60°C×7 days) | A | A | A | A |
| Curability Evaluation (Spot Test on Glass) | AAA | AAA | AAA | AAA |
| Curability Evaluation (Printing with Printer) | AAA | AAA | AAA | AAA |

**Table 10A**

| | Example 9A | Example 10A | Example 11A | Example 12A |
|---|---|---|---|---|
| Storage Stability Evaluation (60°C×7 days) | AA | AA | AA | AA |
| Curability Evaluation (Spot Test on Glass) | AA | AA | AA | AA |
| Curability Evaluation (Printing with Printer) | AA | AA | AA | AA |

**Table 11A**

| | Example 13A | Example 14A | Example 15A | Example 16A |
|---|---|---|---|---|
| Storage Stability Evaluation (60°C×7 days) | A | A | A | A |
| Curability Evaluation (Spot Test on Glass) | A | A | A | A |
| Curability Evaluation (Printing with Printer) | A | A | A | A |

**Table 12A**

| | Example 17A | Example 18A | Example 19A | Example 20A |
|---|---|---|---|---|
| Storage Stability Evaluation (60°C×7 days) | A | A | A | A |
| Curability Evaluation (Spot Test on Glass) | A | A | A | A |
| Curability Evaluation (Printing with Printer) | A | A | A | A |

**Table 13A**

| | Compara. Example 1A | Compara. Example 2A | Compara. Example 3A | Compara. Example 4A |
|---|---|---|---|---|
| Storage Stability Evaluation (60°C×7 days) | AA | AA | AA | AA |
| Curability Evaluation (Spot Test on Glass) | C | C | C | C |
| Curability Evaluation (Printing with Printer) | C | C | C | C |

As apparent from Tables 8A to 13A, the photocurable ink compositions of respective Examples according to the invention were low in viscosity, the sufficient results were obtained in the storage stability and curability evaluation, and the ink compositions were sufficiently usable. Further, it was revealed that allyl glycol and N-vinylformamide made both the storage stability and curability of the ink compositions excellent.

Examples 1B to 24B & Comparative Examples 1B to 4B (Preparation of Respective Ink Compositions of Photocurable Ink Sets)
Any one of the hyperbranch polymer, dendrimer 7 and hypergraft polymer A, a diluent monomer, a photoradical polymerization initiator, a polymerization accelerator and a pigment dispersion were added so as to give a composition (% by weight) shown in the following Tables 2B to 7B to prepare a two-component type photocurable color ink set. Further, dendritic polymer-free photocurable color ink compositions were taken as Comparative Examples 1B to 4B, and compositions thereof are shown in Table 8B.
Pigment dispersion were prepared by methods shown below.

Allyl glycol (manufactured by Nippon Nyukazai Co., Ltd., hereinafter referred to as "AG") as a monomer was added to 15 parts of C.I. Pigment Black 7 (carbon black) as a coloring agent and 3.5 parts of Discoall N-509 (manufactured by Dainichiseika Color & Chemicals Mfg. Co., Ltd.) as a dispersing agent to make 100 parts, followed by mixing by stirring to obtain a mixture. This mixture was subjected to dispersing treatment for 6 hours together with zirconia beads (diameter: 1.5 mm) using a sand mill (manufactured by Yasukawa Seisakusho K.K.)

Then, the zirconia beads were separated with a separator to obtain a black pigment dispersion.

Pigment dispersions corresponding to respective colors, that is, a cyan pigment dispersion (C.I. Pigment Blue 15:3), a magenta pigment dispersion (C.I. Pigment Violet 19) and a yellow pigment dispersion (C.I. Pigment Yellow 155), were similarly prepared.

### (Preparation of Ink Composition A and Ink Composition B)

Ink composition A and ink composition B were prepared according to the following compositions. That is, a monomer, a photoradical polymerization initiator, a polymerization accelerator, a surfactant and a thermoradical polymerization inhibitor were mixed and completely dissolved to prepare ink composition A. Then, a monomer, a polymerization accelerator, a surfactant and a thermoradical polymerization inhibitor were similarly mixed and completely dissolved, and the above-mentioned pigment dispersion was gradually added dropwise to a solvent for ink composition B with stirring. After termination of the dropping, stirring for mixing was performed at normal temperature for 1 hour to obtain ink composition B. Then, Ink composition A and ink composition B were each filtered through a 5-µm membrane filter to obtain desired ink compositions.

**Table 2B**

| | Example 1B | | Example 2B | | Example 3B | | Example 4B | |
|---|---|---|---|---|---|---|---|---|
| | A | B | A | B | A | B | A | B |
| Allyl Glycol | 54.7 | 66.3 | 54.7 | 66.3 | 54.7 | 65.9 | 54.7 | 66.5 |
| N-Vinylformamide | 25 | 15 | 25 | 15 | 25 | 15 | 25 | 15 |
| Hyperbranch Polymer (STAR-501) | 13 | 10 | 13 | 10 | 13 | 10 | 13 | 10 |
| Irgacure 819 | 4 | | 4 | | 4 | | 4 | |
| Irgacure 127 | 1 | | 1 | | 1 | | 1 | |
| Darocur EDB | 1 | 1 | 1 | 1 | 1 | 1 | 1 | 1 |
| Kayacure DETX-s | 1 | | 1 | | 1 | | 1 | |
| BYK-UV3570 | 0.1 | 0.1 | 0.1 | 0.1 | 0.1 | 0.1 | 0.1 | 0.1 |
| Irgastab UV10 | 0.2 | 0.2 | 0.2 | 0.2 | 0.2 | 0.2 | 0.2 | 0.2 |
| Pigment Black-7 | | 6 | | | | | | |
| Pigment Blue-15:3 | | | | 6 | | | | |
| Pigment Violet-19 | | | | | | 6 | | |
| Pigment Yellow-155 | | | | | | | | 6 |
| Dispersing Agent (Polyoxyalkylenepolyalkylenepolyamine) | | 1.4 | | 1.4 | | 1.8 | | 1.2 |

**Table 3B**

| | Example 5B | | Example 6B | | Example 7B | | Example 8B | |
|---|---|---|---|---|---|---|---|---|
| | A | B | A | B | A | B | A | B |
| Allyl Glycol | 54.7 | 66.3 | 54.7 | 66.3 | 54.7 | 65.9 | 54.7 | 66.5 |
| N-Vinylformamide | 25 | 15 | 25 | 15 | 25 | 15 | 25 | 15 |
| Dendrimer 7 | 13 | 10 | 13 | 10 | 13 | 10 | 13 | 10 |
| Irgacure 819 | 4 | | 4 | | 4 | | 4 | |
| Irgacure 127 | 1 | | 1 | | 1 | | 1 | |
| Darocur EDB | 1 | 1 | 1 | 1 | 1 | 1 | 1 | 1 |
| Kayacure DETX-s | 1 | | 1 | | 1 | | 1 | |
| BYK-UV3570 | 0.1 | 0.1 | 0.1 | 0.1 | 0.1 | 0.1 | 0.1 | 0.1 |
| Irgastab UV10 | 0.2 | 0.2 | 0.2 | 0.2 | 0.2 | 0.2 | 0.2 | 0.2 |
| Pigment Black-7 | | 6 | | | | | | |
| Pigment Blue-15:3 | | | | 6 | | | | |
| Pigment Violet-19 | | | | | | 6 | | |
| Pigment Yellow-155 | | | | | | | | 6 |
| Dispersing Agent (Polyoxyalkylenepolyalkylenepolyamine) | | 1.4 | | 1.4 | | 1.8 | | 1.2 |

**Table 4B**

| | Example 9B | | Example 10B | | Example 11B | | Example 12B | |
|---|---|---|---|---|---|---|---|---|
| | A | B | A | B | A | B | A | B |
| Allyl Glycol | 75.7 | 78.3 | 75.7 | 78.3 | 75.7 | 77.9 | 75.7 | 78.5 |
| Hyperbranch Polymer (STAR-501) | 17 | 13 | 17 | 13 | 17 | 13 | 17 | 13 |
| Irgacure 819 | 4 | | 4 | | 4 | | 4 | |
| Irgacure 127 | 1 | | 1 | | 1 | | 1 | |
| Darocur EDB | 1 | 1 | 1 | 1 | 1 | 1 | 1 | 1 |
| Kayacure DETX-s | 1 | | 1 | | 1 | | 1 | |
| BYK-UV3570 | 0.1 | 0.1 | 0.1 | 0.1 | 0.1 | 0.1 | 0.1 | 0.1 |
| Irgastab UV10 | 0.2 | 0.2 | 0.2 | 0.2 | 0.2 | 0.2 | 0.2 | 0.2 |
| Pigment Black-7 | | 6 | | | | | | |
| Pigment Blue-15:3 | | | | 6 | | | | |
| Pigment Violet-19 | | | | | | 6 | | |
| Pigment Yellow-155 | | | | | | | | 6 |
| Dispersing Agent (Polyoxyalkylenepolyalkylenepolyamine) | | 1.4 | | 1.4 | | 1.8 | | 1.2 |

**Table 5B**

| | Example 13B | | Example 14B | | Example 15B | | Example 16B | |
|---|---|---|---|---|---|---|---|---|
| | A | B | A | B | A | B | A | B |
| Ethylene Glycol Dimethacrylate | 86.7 | 85.3 | 86.7 | 85.3 | 86.7 | 84.9 | 86.7 | 86.5 |
| Hyperbranch Polymer (STAR-501) | 6 | 6 | 6 | 6 | 6 | 6 | 6 | 6 |
| Irgacure 819 | 4 | | 4 | | 4 | | 4 | |
| Irgacure 127 | 1 | | 1 | | 1 | | 1 | |
| Darocur EDB | 1 | 1 | 1 | 1 | 1 | 1 | 1 | 1 |
| Kayacure DETX-s | 1 | | 1 | | 1 | | 1 | |
| BYK-UV3570 | 0.1 | 0.1 | 0.1 | 0.1 | 0.1 | 0.1 | 0.1 | 0.1 |
| Irgastab UV10 | 0.2 | 0.2 | 0.2 | 0.2 | 0.2 | 0.2 | 0.2 | 0.2 |
| Pigment Black-7 | | 6 | | | | | | |
| Pigment Blue-15:3 | | | | 6 | | | | |
| Pigment Violet-19 | | | | | | 6 | | |
| Pigment Yellow-155 | | | | | | | | 6 |
| Dispersing Agent (Polyoxyalkylenepolyalkylenepolyamine) | | 1.4 | | 1.4 | | 1.8 | | 1.2 |

**Table 6B**

| | Example 17B | | Example 18B | | Example 19B | | Example 20B | |
|---|---|---|---|---|---|---|---|---|
| | A | B | A | B | A | B | A | B |
| Allyl Glycol | | 78.3 | | 78.3 | | 77.9 | | 78.5 |
| N-Vinylformamide | 25 | | 25 | | 25 | | 25 | |
| Tripropylene Glycol Diacrylate | 67.7 | | 67.7 | | 67.7 | | 67.7 | |
| Hyperbranch Polymer (STAR-501) | | 13 | | 13 | | 13 | | 13 |
| Irgacure 819 | 4 | | 4 | | 4 | | 4 | |
| Irgacure 127 | 1 | | 1 | | 1 | | 1 | |
| Darocur EDB | 1 | 1 | 1 | 1 | 1 | 1 | 1 | 1 |
| Kayacure DETX-s | 1 | | 1 | | 1 | | 1 | |
| BYK-UV3570 | 0.1 | 0.1 | 0.1 | 0.1 | 0.1 | 0.1 | 0.1 | 0.1 |
| Irgastab UV10 | 0.2 | 0.2 | 0.2 | 0.2 | 0.2 | 0.2 | 0.2 | 0.2 |
| Pigment Black-7 | | 6 | | | | | | |
| Pigment Blue-15:3 | | | | 6 | | | | |
| Pigment Violet-19 | | | | | | 6 | | |
| Pigment Yellow-155 | | | | | | | | 6 |
| Dispersing Agent (Polyoxyalkylenepolyalkylenepolyamine) | | 1.4 | | 1.4 | | 1.8 | | 1.2 |

**Table 7B**

| | Example 21B | | Example 22B | | Example 23B | | Example 24B | |
|---|---|---|---|---|---|---|---|---|
| | A | B | A | B | A | B | A | B |
| Allyl Glycol | 54.7 | 66.3 | 54.7 | 66.3 | 54.7 | 65.9 | 54.7 | 66.5 |
| N-Vinylformamide | 25 | 15 | 25 | 15 | 25 | 15 | 25 | 15 |
| Hypergraft Polymer A | 13 | 10 | 13 | 10 | 13 | 10 | 13 | 10 |
| Irgacure 819 | 4 | | 4 | | 4 | | 4 | |
| Irgacure 127 | 1 | | 1 | | 1 | | 1 | |
| Darocur EDB | 1 | 1 | 1 | 1 | 1 | 1 | 1 | 1 |
| Kayacure DETX-s | 1 | | 1 | | 1 | | 1 | |
| BYK-UV3570 | 0.1 | 0.1 | 0.1 | 0.1 | 0.1 | 0.1 | 0.1 | 0.1 |
| Irgastab UV10 | 0.2 | 0.2 | 0.2 | 0.2 | 0.2 | 0.2 | 0.2 | 0.2 |
| Pigment Black-7 | | 6 | | | | | | |
| Pigment Blue-15:3 | | | | 6 | | | | |
| Pigment Violet-19 | | | | | | 6 | | |
| Pigment Yellow-155 | | | | | | | | 6 |
| Dispersing Agent (Polyoxyalkylenepolyalkylenepolyamine) | | 1.4 | | 1.4 | | 1.8 | | 1.2 |

**Table 8B**

| | Ink B | | | | Ink A |
|---|---|---|---|---|---|
| | Comparative Example 1B | Comparative Example 2B | Comparative Example 3B | Comparative Example 4B | |
| Allyl Glycol | 64 | 64 | 63.8 | 64.1 | 54.7 |
| N-Vinylformamide | 31 | 31 | 31 | 31 | 38 |
| Irgacure 819 | | | | | 4 |
| Irgacure 127 | | | | | 1 |
| Darocur EDB | 1 | 1 | 1 | 1 | 1 |
| Kayacure DETX-s | | | | | 1 |
| BYK-UV3570 | 0.1 | 0.1 | 0.1 | 0.1 | 0.1 |
| Irgastab UV10 | 0.2 | 0.2 | 0.2 | 0.2 | 0.2 |
| Pigment Black-7 | 3 | | | | |
| Pigment Blue-15:3 | | 3 | | | |
| Pigment Violet-19 | | | 3 | | |
| Pigment Yellow-155 | | | | 3 | |
| Dispersing Agent (Polyoxyalkylenepolyalkylenepolyamine) | 0.7 | 0.7 | 0.9 | 0.6 | |

As the thermoradical polymerization inhibitor, Irgastab UV-10 (manufactured by Ciba Specialty Chemicals) was used.

### (Storage Stability Test)

Ink compositions A and B of the photocurable ink sets of Examples and the ink compositions of Comparative Examples described above were allowed to stand under environment of 60°C for 7 days, and the initial viscosity (mPa-s) and the viscosity after standing were measured with a rheometer (manufactured by Physica, MCR-300). The rate of change in viscosity was evaluated by the following criteria. The results thereof are shown in Tables 9B to 15B.

AA: The rate of change between the initial viscosity and the viscosity after standing is less than ±12.5%.
A: The rate of change between the initial viscosity and the viscosity after standing is from ±12.5% to less than ±50%.
B: The rate of change between the initial viscosity and the viscosity after standing is ±50% or more.

### (Curability Test)

Ink compositions A and B of each of the above-mentioned photocurable ink sets were dropped onto the same position on a glass substrate and mixed, and irradiated with ultraviolet light having a wavelength of 365 nm under such conditions as to provide an irradiation intensity of 17 mW/cm², an irradiation time of 6 seconds and an integrated quantity of light of 102 mJ/cm² to cure the ink compositions. The ink compositions of Comparative Examples were each dropped as such onto a glass substrate, and subjected to ultraviolet irradiation and curing treatment.
Separately, utilizing an ink jet printer, PM-G900, manufactured by Seiko Epson Corporation, ink compositions A and B of each of the above-mentioned Examples were each filled in separate nozzle lines, respectively, and solid pattern printing was performed at normal temperature and normal pressure using a PC sheet (manufactured by Teijin Chemicals Ltd., Panlite Sheet) under conditions that respective ink droplets were simultaneously landed on the same position. Simultaneously with the printing, curing treatment was performed by means of an irradiation equipment irradiating ultraviolet light with a wavelength of 365 nm and an irradiation intensity of 17 mW/cm², which was installed at a paper-discharge port, under such curing conditions as to provide an irradiation time of 6 seconds and an integrated quantity of light of 102 mJ/cm².
For each of the above, visual evaluation of a surface state and the like were conducted according to the following criteria. The results thereof are shown in Tables 9B to 15B.

AAA: There is no problem in curability, and there is also no problem with respect to nail rubbing of a surface.
AA: Scratched by nail rubbing of a surface, but within a practical level.
A: A surface is scratched by rubbing with a finger, but within a practical level.
B: Only a surface is cured, and the inside is in liquid form.
C: Slightly cured, but liquid in whole.

**Table 9B**

| | Example 1B | | Example 2B | | Example 3B | | Example 4B | |
|---|---|---|---|---|---|---|---|---|
| | A | B | A | B | A | B | A | B |
| Storage Stability Evaluation (60°C×7 days) | A | A | A | A | A | A | A | A |
| Curability Evaluation (Spot Test on Glass) | AA | | AA | | AA | | AA | |
| Curability Evaluation (Printing with Printer) | AA | | AA | | AA | | AA | |

**Table 10B**

| | Example 5B | | Example 6B | | Example 7B | | Example 8B | |
|---|---|---|---|---|---|---|---|---|
| | A | B | A | B | A | B | A | B |
| Storage Stability Evaluation (60°C×7 days) | A | A | A | A | A | A | A | A |
| Curability Evaluation (Spot Test on Glass) | AAA | | AAA | | AAA | | AAA | |
| Curability Evaluation (Printing with Printer) | AAA | | AAA | | AAA | | AAA | |

**Table 11B**

| | Example 9B | | Example 10B | | Example 11B | | Example 12B | |
|---|---|---|---|---|---|---|---|---|
| | A | B | A | B | A | B | A | B |
| Storage Stability Evaluation (60°C×7 days) | AA | AA | AA | AA | AA | AA | AA | AA |
| Curability Evaluation (Spot Test on Glass) | AA | | AA | | AA | | AA | |
| Curability Evaluation (Printing with Printer) | AA | | AA | | AA | | AA | |

**Table 12B**

| | Example 13B | | Example 14B | | Example 15B | | Example 16B | |
|---|---|---|---|---|---|---|---|---|
| | A | B | A | B | A | B | A | B |
| Storage Stability Evaluation (60°C×7 days) | A | A | A | A | A | A | A | A |
| Curability Evaluation (Spot Test on Glass) | A | | A | | A | | A | |
| Curability Evaluation (Printing with Printer) | A | | A | | A | | A | |

**Table 13B**

| | Example 17B | | Example 18B | | Example 19B | | Example 20B | |
|---|---|---|---|---|---|---|---|---|
| | A | B | A | B | A | B | A | B |
| Storage Stability Evaluation (60°C×7 days) | A | AA | A | AA | A | AA | A | AA |
| Curability Evaluation (Spot Test on Glass) | AA | | AA | | AA | | AA | |
| Curability Evaluation (Printing with Printer) | AA | | AA | | AA | | AA | |

**Table 14B**

| | Example 21B | | Example 22B | | Example 23B | | Example 24B | |
|---|---|---|---|---|---|---|---|---|
| | A | B | A | B | A | B | A | B |
| Storage Stability Evaluation (60°C×7 days) | A | A | A | A | A | A | A | A |
| Curability Evaluation (Spot Test on Glass) | A | | A | | A | | A | |
| Curability Evaluation (Printing with Printer) | A | | A | | A | | A | |

**Table 15B**

| | Comparative Example 1B | Comparative Example 2B | Comparative Example 3B | Comparative Example 4B |
|---|---|---|---|---|
| Storage Stability Evaluation (60°C×7 days) | AA | AA | AA | AA |
| Curability Evaluation (Spot Test on Glass) | C | C | C | C |
| Curability Evaluation (Printing with Printer) | C | C | C | C |

As apparent from Tables 9B to 15B, the respective ink compositions of the photocurable ink sets of respective Examples according to the invention were low in viscosity, the sufficient results were obtained in the storage stability and curability evaluation, and the ink compositions were sufficiently usable. Further, it was revealed that allyl glycol and N-vinylformamide made both the storage stability and curability of the ink compositions excellent.

## Claims

1. A photocurable ink composition containing at least a dendritic polymer as a photoradical polymerizable compound, wherein the dendritic polymer is present in the ink composition in an amount of 3 to 30% by weight.

2. The photocurable ink composition according to claim 1, wherein the dendritic polymer comprises a dendrimer and/or a hyperbranch polymer.

3. The photocurable ink composition according to claim 1, wherein the dendritic polymer comprises a dendrigraft polymer and/or a hypergraft polymer.

4. The photocurable ink composition according to any of claims 1 to 3, further containing allyl glycol and/or N-vinylformamide as another photoradical polymerizable compound.

5. The photocurable ink composition according to claim 4, wherein the allyl glycol and/or N-vinylformamideare present in the ink composition in an amount of 20 to 80% by weight.

6. The photocurable ink composition according to claim 1, wherein the dendritic polymer is present in an amount of 5 to 25% by weight.

7. The photocurable ink composition according to claim 2, wherein the dendritic polymer comprises a hyperbranch polymer.

8. The photocurable ink composition according to claim 7, wherein the hyperbranch polymer is obtained by synthesizing a target polymer in one step using a monomer having two or more reaction points of one kind corresponding to branch portions and only one reaction point of another kind corresponding to a connecting portion in one molecule.

9. A photocurable ink composition according to any of claims 1 to 8, wherein the ink is an inkjet ink.

10. A photocurable ink set comprising ink composition A containing at least a photoradical polymerization initiator and ink composition B containing at least a dendritic polymer as a photoradical polymerizable compound, wherein the dendritic polymer is present in ink composition B in an amount of 3 to 30% by weight based on the weight of composition B.

11. The photocurable ink set according to claim 10, wherein the dendritic polymer comprises a dendrimer and/or a hyperbranch polymer.

12. The photocurable ink set according to claim 10, wherein the dendritic polymer comprises a dendrigraft polymer and/or a hypergraft polymer.

13. The photocurable ink set according to any one of claims 10 to 12, further containing allyl glycol and/or N-vinylformamide as another photoradical polymerizable compound in ink composition A and/or ink composition B.

14. The photocurable ink set according to claim 13, wherein the allyl glycol and/or N-vinylformamide are present in ink composition B in an amount of 20 to 80% by weight based on the weight of ink composition B.

## Patentansprüche

1. Photochemisch härtbare Tintenzusammensetzung enthaltend wenigstens ein dendritisches Polymer als eine photoradikalisch polymerisierbare Verbindung, wobei das dendritische Polymer in einer Menge von 3 bis 30 Gew.-% in der Tintenzusammensetzung vorhanden ist.

2. Photochemisch härtbare Tintenzusammensetzung nach Anspruch 1, wobei das dendritische Polymer ein Dendrimer und/oder ein hyperverzweigtes Polymer umfasst.

3. Photochemisch härtbare Tintenzusammensetzung nach Anspruch 1, wobei das dendritische Polymer ein Dendrigraft-Polymer und/oder ein Hypergraft-Polymer umfasst.

4. Photochemisch härtbare Tintenzusammensetzung nach einem der Ansprüche 1 bis 3, außerdem enthaltend Allylglycol und/oder N-Vinylformamid als eine weitere photoradikalisch polymerisierbare Verbindung.

5. Photochemisch härtbare Tintenzusammensetzung nach Anspruch 4, wobei das Allylglycol und/oder N-Vinylformamid in einer Menge von 20 bis 80 Gew.-% in der Tintenzusammensetzung vorhanden sind.

6. Photochemisch härtbare Tintenzusammensetzung nach Anspruch 1, wobei das dendritische Polymer in einer Menge von 5 bis 25 Gew.-% vorhanden ist.

7. Photochemisch härtbare Tintenzusammensetzung nach Anspruch 2, wobei das dendritische Polymer ein hyperverzweigtes Polymer umfasst.

8. Photochemisch härtbare Tintenzusammensetzung nach Anspruch 7, wobei das hyperverzweigte Polymer durch Synthetisieren eines Zielpolymers in einem Schritt unter Verwendung eines Monomers mit zwei oder mehr Reaktionspunkten von einer Art entsprechend Verzweigungsteilen und nur einem Reaktionspunkt von einer anderen Art entsprechend einem Verbindungsteil in einem Molekül erhalten wird.

9. Photochemisch härtbare Tintenzusammensetzung nach einem der Ansprüche 1 bis 8, wobei die Tinte eine Tintenstrahltinte ist.

10. Photochemisch härtbarer Tintensatz umfassend Tintenzusammensetzung A enthaltend wenigstens einen photoradikalischen Polymerisationsinitiator und Tintenzusammensetzung B enthaltend wenigstens ein dendritisches Polymer als eine photoradikalisch polymerisierbare Verbindung, wobei das dendritische Polymer in der Tintenzusammensetzung B in einer Menge von 3 bis 30 Gew.-%, bezogen auf das Gewicht der Zusammensetzung B, vorhanden ist.

11. Photochemisch härtbarer Tintensatz nach Anspruch 10, wobei das dendritische Polymer ein Dendrimer und/oder ein hyperverzweigtes Polymer umfasst.

12. Photochemisch härtbarer Tintensatz nach Anspruch 10, wobei das dendritische Polymer ein Dendrigraft-Polymer und/oder ein Hypergraft-Polymer umfasst.

13. Photochemisch härtbarer Tintensatz nach einem der Ansprüche 10 bis 12, außerdem enthaltend Allylglycol und/oder N-Vinylformamid als eine weitere photoradikalisch polymerisierbare Verbindung in Tintenzusammensetzung A und/oder Tintenzusammensetzung B.

14. Photochemisch härtbarer Tintensatz nach Anspruch 13, wobei das Allylglycol und/oder N-Vinylformamid in der Tintenzusammensetzung B in einer Menge von 20 bis 80 Gew.-%, bezogen auf das Gewicht der Tintenzusammensetzung B, vorhanden sind.

## Revendications

1. Composition d'encre photodurcissable, contenant au minimum un polymère dendritique en tant que composé polymérisable par polymérisation radicalaire photoinduite, ce polymère dendritique étant présent dans la composition d'encre en une quantité de 3 à 30 % en poids.

2. Composition d'encre photodurcissable selon la revendication 1, dans laquelle le polymère dendritique comprend un dendrimère et/ou un polymère hyper ramifié.

3. Composition d'encre photodurcissable selon la revendication 1, dans laquelle le polymère dendritique comprend un dendrimère greffé et/ou un polymère hyper greffé.

4. Composition d'encre photodurcissable selon n'importe lesquelles des revendications 1 à 3, contenant en outre de l'allylglycol et/ou du N-vinylformamide en tant qu'autre composé polymérisable par polymérisation radicalaire photoinduite.

5. Composition d'encre photodurcissable selon la revendication 4, dans laquelle l'allylglycol et/ou le N-vinylformamide sont présents dans la composition d'encre en une quantité de 20 à 80 % en poids.

6. Composition d'encre photodurcissable selon la revendication 1, dans laquelle le polymère dendritique est présent en une quantité de 5 à 25 % en poids.

7. Composition d'encre photodurcissable selon la revendication 2, dans laquelle le polymère dendritique comprend un polymère hyper ramifié.

8. Composition d'encre photodurcissable selon la revendication 7, dans laquelle le polymère hyper ramifié est obtenu par synthèse d'un polymère cible en une étape à l'aide d'un monomère ayant au moins deux sites de réaction d'un type correspondant à des parties ramifiées et un seul site de réaction d'un autre type correspondant à une partie de liaison dans une molécule.

9. Composition d'encre photodurcissable selon n'importe lesquelles des revendications 1 à 8, dans laquelle l'encre est une encre pour jet d'encre.

10. Jeu d'encres photodurcissables, comprenant une composition d'encre A contenant au minimum un initiateur de polymérisation radicalaire photoinduite et une composition d'encre B contenant au minimum un polymère dendritique en tant que composé polymérisable par polymérisation radicalaire photoinduite, le polymère dendritique étant présent dans la composition d'encre B en une quantité de 3 à 30 % en poids par rapport au poids de la composition B.

11. Jeu d'encres photodurcissables selon la revendication 10, dans lequel le polymère dendritique comprend un dendrimère et/ou un polymère hyper ramifié.

12. Jeu d'encres photodurcissables selon la revendication 10, dans lequel le polymère dendritique comprend un dendrimère greffé et/ou un polymère hyper greffé.

13. Jeu d'encres photodurcissables selon l'une quelconque des revendications 10 à 12, contenant en outre de l'allylglycol et/ou du N-vinylformamide en tant qu'autre composé polymérisable par polymérisation radicalaire photoinduite dans la composition d'encre A et/ou la composition d'encre B.

14. Jeu d'encres photodurcissables selon la revendication 13, dans lequel l'allylglycol et/ou le N-vinylformamide sont présents dans la composition d'encre B en une quantité de 20 à 80 % en poids par rapport au poids de la composition d'encre B.
